# FASCICULE DE BREVET EUROPEEN

(11) **EP 3 564 065 B1**
(45) Date de publication et mention de la délivrance du brevet: **15.12.2021**
(21) Numéro de dépôt: 19172456.6
(22) Date de dépôt: 03.05.2019
(51) Int. Cl.: B60M 1/30, B60M 1/18

(54) **SEGMENT DE PISTE ISOLANTE POUR UN SYSTÈME D'ALIMENTATION PAR LE SOL ET SYSTÈME D'ALIMENTATION PAR LE SOL CORRESPONDANT**
ISOLIERBAHNSEGMENT FÜR EIN STROMVERSORGUNGSSYSTEM ÜBER DEN BODEN, UND ENTSPRECHENDES STROMVERSORGUNGSSYSTEM ÜBER DEN BODEN
SECTION OF INSULATING TRACK FOR A GROUND-BASED POWER SUPPLY SYSTEM AND CORRESPONDING GROUND-BASED POWER SUPPLY SYSTEM

(30) Priorité: 04.05.2018 FR 1853864
(43) Date de publication de la demande: 06.11.2019
(73) Titulaire: ALSTOM Transport Technologies, 93400 Saint-Ouen (FR)
(72) Inventeur: DUPRAT, Patrick, 93340 Le Raincy (FR)
(74) Mandataire: Lavoix

(56) Documents cités:
- EP-A1- 2 907 690
- CN-A- 104 149 661
- CN-U- 204 095 572
- Anonymous: "Tramway & Light Rail - WELCOME TO DOSHIN RUBBER", , 18 juillet 2017 (2017-07-18), XP055541151, Extrait de l'Internet: URL:https://web.archive.org/web/2017071814 2916/https://doshinrubber.com/tramway-ligh t-rail/ [extrait le 2019-01-11]
- Anonymous: "Alimentation par le sol - Wikipedia", , 13 avril 2018 (2018-04-13), XP055541218, Extrait de l'Internet: URL:https://de.wikipedia.org/w/index.php?t itle=Alimentation_par_le_sol&oldid=1764618 95 [extrait le 2019-01-14]

## Description

L'invention a pour domaine celui des systèmes d'alimentation par le sol.

Le brevet FR3017342 décrit un système d'alimentation par le sol pour un véhicule ferroviaire, comportant une piste conductrice maintenue par un support de piste sur un radier en béton.

Le système d'alimentation par le sol est enterré dans la chaussée de manière à ce que la piste conductrice affleure à la surface de la chaussée ou fasse une légère saillie de quelques centimètres au-dessus de la surface de la chaussée.

La piste conductrice est subdivisée en une pluralité de segments, qui sont installés les uns à la suite des autres sur le support de piste selon la direction de la voie ferrée.

Entre deux segments successifs de la piste conductrice, est collé, sur le support de piste, un élément isolant pour former une piste conductrice discontinue.

Le document EP 2907690 divulgue un support de piste possible prenant la forme d'un chausson en matériau élastomère propre à recevoir les composants de la piste conductrice et être fixé dans un radier en béton de la voie.

Le document "Tramway & Light Rail - WELCOME TO DOSHIN RUBBER", 18 juillet 2017 (2017-07-18), (accessible à l'adresse Internet: httpsj/web.archive.org/web/2017071814291 6/https://doshinrubber.com/tramway-light-rail/) divulgue un tel système d'alimentation par le sol mettant en oeuvre un support de piste similaire à celui divulgué dans le document EP 2907690.

Un véhicule ferroviaire, tel qu'un tramway, est équipé de deux patins qui sont descendus de manière à venir en contact glissant sur la piste conductrice. Les segments de la piste sont alimentés individuellement en puissance électrique au passage du tramway de manière à lui fournir la puissance nécessaire à son déplacement.

Une évolution d'un système d'alimentation sans caténaire consiste à combiner la solution d'alimentation par le sol avec une solution d'énergie embarquée permettant ainsi au tramway d'avoir une certaine autonomie.

Dans cette solution mixte, qui permet d'optimiser la longueur de piste conductrice à installer, le tramway vient recharger sa source d'énergie embarquée lorsqu'il est sur une zone de la voie alimentée par le sol (aussi dénommée zone équipée).

Ce faisant, les zones de la voie franchies en autonomie sont dépourvues d'équipement appartenant au système d'alimentation (aussi dénommée zone non-équipée).

Pour éviter qu'ils ne frottent sur la surface de la chaussée au moment du franchissement par le véhicule ferroviaire d'une zone non-équipée, il est nécessaire de relever les patins selon la procédure suivante : le tramway est arrêté avant de rentrer sur la zone non-équipée ; chaque patin est relevé de manière à quitter le contact avec la piste conductrice ; une fois les patins relevés, le tramway franchit en autonomie la zone non-équipée ; une fois au-dessus d'une nouvelle zone équipée, le tramway est à nouveau arrêté ; les patins sont descendus pour venir en contact de la piste conductrice ; et finalement le tramway peut repartir.

Il est ainsi nécessaire de procéder au relevage du ou de chaque patin du véhicule électrique car s'il était laissé en position basse il risquerait de frotter sur différents types de revêtement non prévus à cet effet (herbe, béton, asphalte, pavés, etc.) Le patin connaîtrait alors une dégradation accélérée et un vieillissement prématuré.

L'invention a donc pour but de répondre à cet inconvénient en proposant un système d'alimentation par le sol amélioré.

Pour cela l'invention a pour objet un segment de piste isolante et un système d'alimentation par le sol selon les revendications annexées.

L'invention et ses avantages seront mieux compris à la lecture de la description détaillée qui va suivre d'un mode de réalisation particulier, donné uniquement à titre d'exemple non limitatif, cette description étant faite en se référant aux dessins annexés, sur lesquels :
- la figure 1 est une représentation en perspective éclatée d'un système d'alimentation par le sol selon l'invention implanté au niveau d'une intersection entre une voie ferrée et une route ; et,
- la figure 2 est une représentation en perspective d'un segment de piste isolante du système d'alimentation par le sol de la figure 1, ce segment étant représenté en coupes verticales partielles.

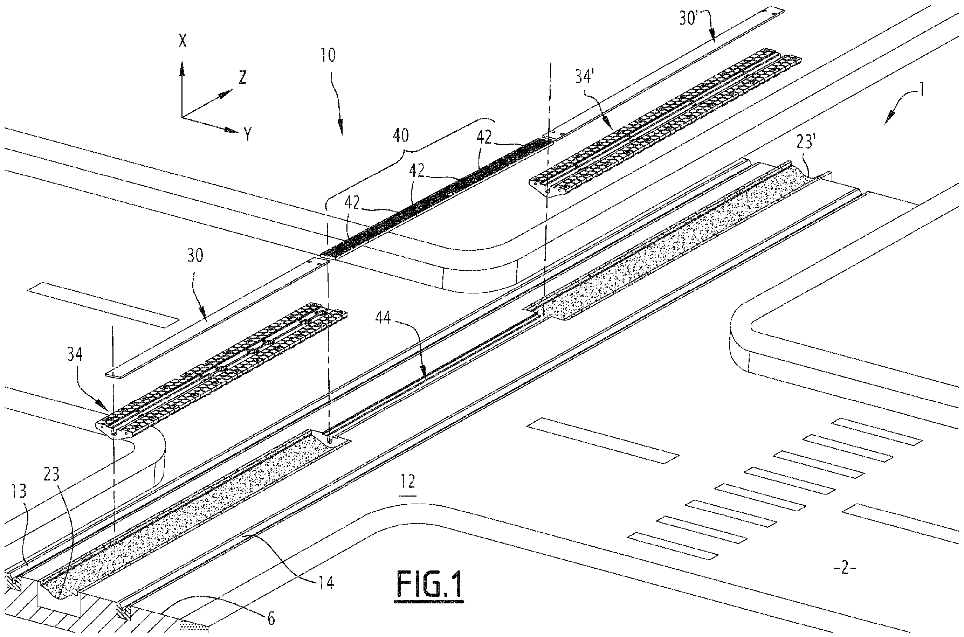

La figure 1 représente l'intersection 12 entre une voie ferrée 1 et une route 2.

La voie ferrée comporte deux fils de rails 13 et 14 circulant en parallèle l'un de l'autre, selon une direction longitudinale Z de la voie ferrée 1.

La route 2 circule selon une direction Y, orthogonale à la voie ferrée 1. La direction verticale correspond à la direction X.

La voie 1 est équipée d'un système d'alimentation par le sol 10 pour permettre la circulation d'un véhicule ferroviaire (non représenté sur les figures), notamment un tramway, en lui fournissant l'énergie électrique dont il a besoin.

Le système 10 comporte notamment une piste conductrice 30 alimentée en puissance électrique par des moyens adaptés.

La piste conductrice 30 affleure à la surface de la chaussée 6.

Chaque patin dont est équipé le tramway glisse sur la surface supérieure de la piste conductrice 30 de manière à collecter la puissance électrique délivrée par le système 10.

Dans le mode de réalisation particulier, représenté à la figure 1, la piste conductrice 30 est maintenue en position par un support de piste 34, qui lui-même est ancré dans un radier en béton 23, coulé au fond d'une tranchée pratiquée dans la surface de la chaussée 6.

Dans le mode de réalisation particulier représenté à la figure 1, le support de piste 34 est réalisé dans un matériau élastomère, dont la face supérieure comporte une rainure de réception de la piste conductrice 30 et dont la face inférieure présente une forme concave en V de manière à être reçue dans une forme conjuguée réservée dans la partie supérieure du radier 23.

Il est à noter que l'on connaît d'autres types de systèmes d'alimentation par le sol qui diffèrent du mode de réalisation de la figure 1 par un support de piste différent. Par exemple, on connait un support de piste constitué par un profilé fixé sur le radier en béton. Ce profilé comporte, sur sa face supérieure, une rainure de réception de la piste conductrice.

Au niveau de l'intersection 12 proprement dite, la piste conductrice est interrompue. Elle présente donc un tronçon de piste conductrice 30 en amont de l'intersection 12 et un tronçon de piste conductrice 30' en aval de l'intersection 12. Le tronçon aval est maintenu par un support 34' ancré sur un radier en béton 23'. L'intersection 12 est donc une zone non-équipée.

Selon l'invention, pour éviter d'avoir à relever le ou les patins du tramway au franchissement de l'intersection 12, le système 10 comporte une piste isolante 40 s'étendant entre les tronçons de piste conductrice 30 et 30', de manière à assurer une continuité de surface pour le ou les patins du tramway. La piste isolante 40 est implantée de manière à ce que la surface supérieure de la piste isolante 40 se trouve au même niveau que la surface supérieure des tronçons de piste conductrice 30 et 30', au moins au niveau des extrémités des tronçons de piste conductrice.

La piste isolante 40 est constituée d'une pluralité de segments de piste isolante 42. Les segments 42 sont disposés les uns à la suite des autres selon la direction Z.

Chaque segment 42 est fixé directement sur la surface de la chaussée 6.

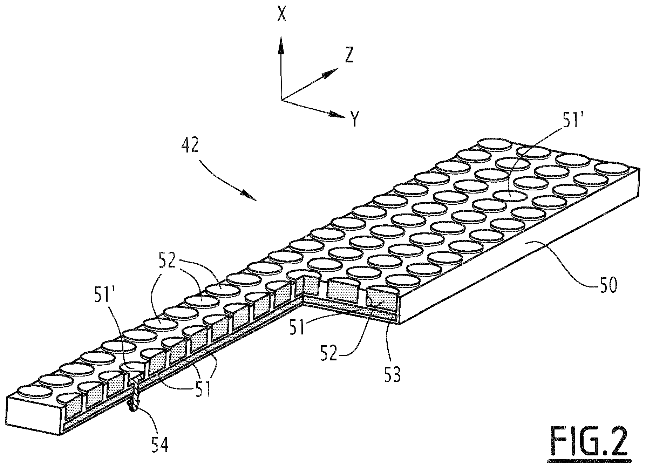

Chaque segment 42 est ainsi avantageusement reçu dans une rainure 44 adaptée pratiquée dans la surface de la chaussée 6. Chaque segment de piste isolante 42 est fixé par des moyens de fixation qui seront détaillés à la figure 2. L'asphalte constitutif de la couche superficielle de la chaussée est amenée de part et d'autre de la piste isolante 40 de manière à ce que celle-ci soit affleurante à la surface de la chaussée 6 ou fasse saillie de quelques millimètres au-dessus de cette surface.

En variante, les segments 42 sont ancrés directement sur une face supérieure plane (ou munie d'une rainure adaptée) du radier en béton du système d'alimentation par le sol.

Ainsi, l'implantation de la piste isolante ne requiert pas de support de piste pour sa fixation.

En se référant à la figure 2, un segment de piste isolante 42 est représenté.

Il présente une forme générale parallélépipédique.

Il comporte un corps 50 réalisé en un matériau isolant du courant électrique, de préférence un élastomère, par exemple un élastomère du type EPDM (éthylène-propylène-diène monomère).

Le corps 50 comporte une pluralité de trous borgnes 51. Ceux-ci sont disposés de manière à former un motif, par exemple une matrice ayant une pluralité de rangées et de colonnes s'étendant sur toute la face supérieure du corps 50.

A l'exception de deux trous borgnes 51' qui sont réservés pour la fixation du segment 42, chaque trou borgne 51 reçoit un insert 52, de préférence de forme cylindrique. Le segment de piste isolante décrit ici en détail étant court (il présente une longueur inférieure ou égale à 60cm) deux trous borgnes sont réservés pour la fixation. En variante, notamment pour des segments plus long, un plus grand nombre de trous borgnes peuvent être réservés à la fixation.

Chaque insert 52 présent un diamètre légèrement supérieur à celui du trou borgne 51 qui le reçoit. L'insert est alors inséré à force dans le trou borgne et les forces de frottement sont suffisantes pour un bon maintien en position. Eventuellement, les inserts peuvent également être collés.

Chaque insert 52 présente une hauteur supérieure à la profondeur du trou borgne 51 qui le reçoit. Ainsi les inserts 52 font saillie au-dessus de la face supérieure du corps 50. La face supérieure des inserts 52 constituent ainsi la surface supérieure du segment de piste isolante 42 contre laquelle glisse le frotteur du tramway. Par exemple, les inserts ont un diamètre de 20 mm et une hauteur de 10 mm. L'arête supérieure de chaque insert est avantageusement chanfreinée pour éviter les chocs avec le frotteur.

Le matériau des inserts 52 est choisi de manière à présenter une dureté adaptée pour limiter l'usure et autoriser le glissement du frotteur, tout en résistant au passage des véhicules routiers traversant l'intersection 12. Par exemple, les inserts 52 sont réalisés en céramique, par exemple constituée à 92% d'alumine, qui est le matériau isolant électrique résistant le mieux à l'abrasion.

Comme représenté sur la figure 2, deux trous borgnes 51' sont réservés pour la fixation du segment de piste isolante 42.

Les moyens de fixation sont par exemple constitués par une vis 54 et une cheville isolante, dont une seule vis 54 est visible sur la figure 2.

Pour permettre un tel ancrage, le matériau élastomère du corps 50 du segment 42 est renforcé par une plaque métallique 53 s'étendant sensiblement sur l'intégralité de la longueur et de la largeur du segment 42. La plaque 53 est de préférence réalisée en acier (S235 par exemple). Cette plaque métallique 53 est noyée dans le matériau élastomère constitutif du corps 50. Elle est située en dessous des trous borgnes de réception des inserts.

Le fait que le segment de piste isolante 42 soit renforcé par une plaque métallique 53 améliore sa solidité mécanique et permet une implantation simple dans la chaussée.

Le fond du trou borgne 51' est muni d'un trou traversant passant à travers la plaque métallique 53 et les couches d'élastomère au-dessus et en-dessous de la plaque métallique 53. Le trou traversant débouche sur la face inférieure du corps 50, qui correspond également à la surface inférieure du segment de piste isolante 42.

La vis 54 est insérée à travers le trou traversant dans la cheville pour venir s'ancrer par exemple dans le béton du radier. La tête de la vis 54 est reçue intégralement à l'intérieur du trou borgne 51' correspondant.

L'homme du métier constatera que l'utilisation d'une piste isolante pour rabouter deux tronçons de piste conductrice permet d'assurer une continuité de surface propice au glissement du frotteur dont est équipé le véhicule électrique. Il n'y a donc plus besoin de mettre en œuvre la procédure complexe de relevage du frotteur au moment du franchissement d'une intersection équipée du système selon l'invention.

De plus, la possibilité de fixer directement la piste isolante dans la chaussée ou, en variante, sur un radier en béton (ayant une face supérieure plane ou munie d'une rainure présentant un profil simple), permet de réduire la longueur de piste d'alimentation à installer.

Le chantier d'installation d'une telle voie ferrée peut donc consister à réaliser les tronçons en amont et en aval d'une section de la voie que le tramway franchira en autonomie.

## Revendications

1. Segment de piste isolante (42) pour un système d'alimentation par le sol (10), ledit segment de piste isolante (42) comportant un corps (50) réalisé en un matériau isolant du courant électrique, ledit segment de piste isolante (42) constituant une portion d'une piste isolante (40) destinée à former, avec une piste conductrice du système d'alimentation par le sol, une surface de glissement continue pour un patin d'un véhicule alimenté par ledit système d'alimentation par le sol,
**caractérisé en ce que** le corps (50) est réalisé en un matériau élastomère et intègre une plaque métallique (53) de renfort du corps (50),
**en ce que** le corps (50) est muni d'une pluralité d'inserts (52) qui définissent la surface de glissement dudit segment de piste isolante,
et **en ce que** la plaque métallique (53) est noyée dans le matériau élastomère constitutif du corps (50) et est située en dessous de trous borgnes (51) de réception des inserts (52).

2. Segment selon la revendication 1, dans lequel matériau élastomère est un élastomère du type éthylène-propylène-diène monomère - EPDM.

3. Segment selon la revendication 1 ou la revendication 2, dans lequel les inserts (52) sont réalisés en céramique.

4. Segment selon l'une quelconque des revendications 1 à 3, dans lequel le segment de piste isolante (42) comporte un trou traversant propre à recevoir un système de fixation adapté (54).

5. Système d'alimentation par le sol (10), **caractérisé en ce qu'**il comporte au moins un segment de piste isolante (42) selon l'une quelconque des revendications 1 à 4.

6. Système d'alimentation par le sol selon la revendication 5, dans lequel le segment de piste isolante (42) est ancré directement dans un radier en béton enterré dans la chaussée.

7. Système d'alimentation par le sol selon la revendication 5, dans lequel le segment de piste isolante (42) est ancré directement dans la chaussée.

## Patentansprüche

1. Isolierbahnsegment (42) für ein Versorgungssystem über den Boden (10), das Isolierbahnsegment (42) umfassend einen Körper (50), der aus einem elektrisch isolierenden Material hergestellt ist, wobei das Isolierbahnsegment (42) einen Abschnitt einer isolierenden Bahn (40) bildet, um zusammen mit einer leitenden Bahn des Versorgungssystems über den Boden eine kontinuierliche Gleitfläche für eine Kufe eines Fahrzeugs zu bilden, das durch das Versorgungssystem über den Boden versorgt wird,
**dadurch gekennzeichnet, dass** der Körper (50) aus einem elastomeren Material ausgeführt ist und eine Metallplatte (53) zur Verstärkung des Körpers (50) integriert,
dadurch, dass der Körper (50) mit einer Vielzahl von Einsätzen (52) versehen ist, die die Gleitfläche des Isolierbahnsegments definieren,
und dass die Metallplatte (53) in das Elastomermaterial eingebettet ist, das den Körper (50) bildet und sich unter Sacklöchern (51) zum Aufnehmen der Einsätze (52) befindet.

2. Segment nach Anspruch 1, wobei das Elastomermaterial ein Elastomer vom Typ Ethylen-Propylen-Dien-Monomer - EPDM ist.

3. Segment nach Anspruch 1 oder Anspruch 2, wobei die Einsätze (52) aus Keramik ausgeführt sind.

4. Segment nach einem der Ansprüche 1 bis 3, wobei das Isolierbahnsegment (42) ein Durchgangsloch umfasst, das zum Aufnehmem eines angepassten Befestigungssystems (54) geeignet ist.

5. Versorgungssystem über den Boden (10), **dadurch gekennzeichnet, dass** es mindestens ein Isolierbahnsegment (42) nach einem der Ansprüche 1 bis 4 umfasst.

6. Versorgungssystem über den Boden nach Anspruch 5, wobei das Isolierbahnsegment (42) direkt in einer Bodenplatte aus Beton verankert ist, die in der Fahrbahn eingegraben ist.

7. Versorgungssystem über den Boden nach Anspruch 5, wobei das Isolierbahnsegment (42) direkt in der Fahrbahn verankert ist.

## Claims

1. Insulating track segment (42) for a ground power supply system (10), said insulating track segment (42) comprising a body (50) made of an electrical insulating material, wherein the insulating track segment (42) constitutes a portion of an insulating track (40) for forming, with a conductive track of the ground power supply system, a continuous sliding surface for a pad of a vehicle powered by the ground power supply system,
**characterized in that** the body (50) is made of an elastomeric material and incorporating a metal plate (53) for reinforcing the body (50),
**in that** the body (50) is provided with a plurality of inserts (52) defining the sliding surface of the insulating track segment,
and **in that** the metal plate (53) is embedded in the elastomeric material making the body (50) and is located beneath blind holes (51) for receiving the inserts.

2. Segment according to claim 1, wherein the elastomeric material is an elastomer of the ethylene-propylene-diene monomer - EPDM type.

3. Segment according to claim 1 or claim 2, wherein the body (50) is made of an elastomeric material and the inserts (52) are made of ceramic.

4. Segment according to any one of claims 1 to 3, wherein the insulating track segment (42) has a through-hole designed to receive a suitable fastening system (54).

5. Ground power supply system (10), **characterized in that** it comprises at least one insulating track segment (42) according to any one of claims 1 to 4.

6. Ground power supply system according to claim 5, wherein the insulating track segment (42) is anchored directly into a concrete slab buried in the roadway.

7. Ground power supply system according to claim 5, wherein the insulating track segment (42) is anchored directly in the roadway.
